# EUROPÄISCHE PATENTSCHRIFT

(11) **EP 1 107 898 B1**
(45) Veröffentlichungstag und Bekanntmachung des Hinweises auf die Patenterteilung: **19.06.2002**
(21) Anmeldenummer: 99955662.4
(22) Anmeldetag: 01.09.1999
(51) Int. Cl.: B62D 1/00

(54) **SEITENPLANENAUFHÄNGUNG**
LATERAL TARPAULIN SUSPENSION
BACHE LATERALE SUSPENDUE

(30) Priorität: 01.09.1998 DE 19839824
(43) Veröffentlichungstag der Anmeldung: 20.06.2001
(73) Patentinhaber: Edscha LKW-Schiebeverdecke GmbH, 42855 Remscheid (DE)
(72) Erfinder: FLIEGE, Dieter, D-42855 Remscheid (DE); REMMEL, Roger, D-42879 Remscheid (DE); DRASCH, Josef, D-94577 Winzer (DE)
(74) Vertreter: Sparing, Rolf Klaus
(86) Internationale Anmeldenummer: DE9902808
(87) Internationale Veröffentlichungsnummer: WO0012373

(56) Entgegenhaltungen:
- US-A- 2 465 621

## Beschreibung

Die Erfindung betrifft eine bekannte Seitenplanenaufhängung nach dem Oberbegriff des Anspruchs 1.

Ähnliche Verdecke sind zum Beispiel bekannt aus EP-A-0 825 047.

US-A-2,465,621 beschreibt eine Seitenplanenaufhängung, bei der die Seitenplane an ihrem unteren Ende mit einem festen Teil über ein Befestigungsglied gespannt wird, wobei dieses zweiteilig ausgestaltet ist und dessen unterer Teil mittels Schrauben an einem Karosserieteil angebracht wird, während der obere Teil an einem Seitenteil einer Plane, die Dach und Seitenteile abdeckt, einhängbar und wieder lösbar ist, wobei die beiden Teile entgegen der Last einer jeder eine gegenseitige Bewegung ermöglichen, um Schrumpfungen oder Ausdehnungen der Plane auszugleichen.

Bei aus der Praxis bekannten Anordnungen bzw. Aufhängungen von Seitenplanen an Verdecken für Fahrzeugaufbauten, insbesondere auch zusammenschiebbaren Verdecken von Fahrzeugaufbauten ist mehr oder minder regelmäßig vorgesehen, daß die Seitenplanen über Hängegleiter, die zudem in den meisten Fällen vermittels zweier teilkugelförmiger Rollen in komplementär gestalteten Laufbahnen der oberen Längsträger des Verdeckgestells aufgehängt sind, in Längsrichtung der Fahzeugseitenwand verschiebbar aufgehängt sind. Die Seitenplanen werden dabei üblicherweise über an ihrem unteren Ende angreifende oder wenigstens mit an ihrem unteren Ende angeordneten Eingriffsmitteln zusammenwirkenden Spanneinrichtungen gespannt, um während der Fahrt des Fahrzeuges ein Aufblähen der Seitenplanen auszuschließen. Die bekannten im unteren

Bereich der Seitenplanen angreifenden Spannmittel sind entweder mit einem erheblichen Kraftaufwand durch die Bedienungsperson oder aber mit einem verhältnismäßig hohen Herstellungsaufwand behaftet, falls die für besondere Transportsysteme, beispielsweise den sog. Huckepack-Transport europäischer Eisenbahnen vorgegebenen Bedingungen erfüllt werden müssen.

Es ist die Aufgabe der Erfindung, eine Seitenplanenaufhängung nach dem Oberbegriff des Anspruchs 1 zu schaffen, die bei einfacher Aufhängung eine günstige Spanneinrichtung für die Seitenwandplanen eines Fahrzeugaufbaus ermöglicht.

Diese Aufgabe wird bei der eingangs genannten Seitenplanenaufhängung erfindungsgemäß mit den kennzeichnenden Merkmalen des Anspruchs 1 gelöst.

Somit wird eine Seitenplanenaufhängung geschaffen, die herkömmliche Bauarten für Nutzfahrzeuge, insbesondere bei für Fahrzeugaufbauten und Container, dahingehend verbessert, daß bei unverändert einfacher Aufhängung und Handhabbarkeit der längsverschieblichen Seitenwandplanen eine verbesserte und hinsichtlich des damit verbundenen Arbeitsaufwandes optimierte Spanneinrichtung für die Seitenwandplanen eines Fahrzeugaufbaues erreicht wird.

Durch die Verlagerung der Mittel zum Spannen bzw. zum Aufrechterhalten der Spannung in der Seitenwandplane von deren unterem zu deren oberen Ende hin wird in erster Linie eine Vereinfachung der Handhabung der Seitenwandplane beim Öffnen und Schließen erreicht, da die Seitenwandplane nunmehr nur noch mit ihrem unteren Ende am Fahrzeugaufbau befestigt werden muß und sich die Spannung dann automatisch aus den oberendig an der Seitenwandplane angreifenden Federkräften ergibt. Vor allem braucht die Bedienperson nicht mehr auf eine Aufrechterhaltung bzw. Erzielung einer Spannung der Seitenwandplane zu achten. Schließlich ergibt sich aus der Verlagerung der Einrichtung zur Spannung bzw. Aufrechterhaltung der Spannung der Seitenwandplane von deren unteren handhabbaren zu deren oberen Ende hin auch eine Vereinfachung der Spannmittel. Insbesondere können dabei die erfindungsgemäß zur Erzeugung eines Widerstands gegen eine Relativbewegung der beiden Teile des Befestigungsschilds vorgesehenen Mittel völlig unterschiedlich ausgebildet sein und beispielsweise auch durch Streifen oder Blöcke eines elastisch verformbaren Materials gebildet sein.

Zweckmäßigerweise ist bei einer Einrichtung zum Erzeugen und Aufrechterhalten einer Spannung in einer Seitenwandplane eines Fahrzeugaufbaus vorgesehen. daß die beiden Teile des Befestigungsschildes entgegen der Last einer Zugfeder relativ zueinander beweglich sind. Die Zugfeder kann vorteilhaft durch eine Schraubenfeder gebildet und einerseits an dem mit dem Hängegleiter verbundenen Teil des Befestigungsschilds und andererseits an dem an der Plane befestigten Teil des Befestigungsschilds jeweils vermittels einer Bohrungsausnehmung und eines teilringförmigen Endhakens eingehängt sein.

Um eine möglichst reibungslose Verstellung der beiden Teile eines geteilten Befestigungsschildes auch nach längeren und den Einflüssen von Umweltverhältnissen ausgesetzten Betriebszeiten zu erreichen bzw. sicher zu stellen ist vorzugsweise zudem vorgesehen, daß die beiden relativ zueinander beweglichen Teile des Befestigungsschilds aneinander geführt sind, vorzugsweise in der Weise, daß das mit dem Gleiter verbundene Teil des Befestigungsschilds als ebener und mit einer mittigen Langlochausnehmung versehener Flachmaterialzuschnitt und das mit der Plane verbundene Teil des Befestigungsschilds bügelförmig ausgebildet und zumindest einseitig mit die Längsränder der Langlochausnehmung in dem mit dem Gleiter verbundenen Teil hintergreifenden Pratzen ausgestattet ist.

In weiterer vorteilhafter Ausgestaltung kann ferner vorgesehen werden, daß die der Befestigung der Seitenplane zugeordnete Rückenfläche des mit der Plane zu verbindenden Teils des Befestigungsschilds eine im wesentlichen dreieckförmige, sich von oben nach unten verjüngende Grundrißform aufweist und damit bei an sich weitgehendst gewichtssparender Ausbildung zumindest für die Verbindung mit der Seitenwandplane eine größtmögliche Anlagefläche gewährleistet.

Zweckmäßigerweise kann weiter vorgesehen sein, daß die Seitenplane im Bereich deren größter Breite mittels einer Druckverteilungsplatte und einer wenigstens zwei Nieten umfassenden Nietung an der Rückenfläche des mit der Seitenplane verbundenen Teils befestigt ist.

Alternativ hierzu ist es aber vorteilhaft möglich, eine erfindungsgemäße Seitenwandplanenaufhängung derart auszubilden, daß das eine mit der Seitenplane verbundene, eine sich von oben nach unten verjüngende Grundrißform aufweisende Teil des Befestigungsschilds mit seinem oberen Bereich das mit dem Hängegleiter verbundene Teil des Befestigungsschilds umgreifend ausgebildet und in diesem Bereich vermittels einer Langlochausnehmung in dem senkrecht zur Ebene seiner Rückenfläche abgestellten Schenkelbereich seiner Bügelform an dem mit dem Hängegleiter verbundenen Teil des Befestigungsschilds geführt ist.

Im Zusammenhang mit einer solchen Verwirklichungsform kann dann zweckmäßigerweise weiter vorgesehen sein, daß die in der Längsmitte des mit dem Hängegleiter verbundenen Teils des Befestigungsschilds angeordnete und über die Länge des bügelförmigen Teils hin in ihrer Breite im wesentlichen eine dem Durchmesser der Zugfeder entsprechenden Breite aufweisende Ausnehmung in ihrem unteren Bereich mit einer Verbreiterung ausgestattet ist.

Unabhängig von der jeweils bevorzugten Verwirklichungsform besteht eine günstige Ausgestaltungsweise darin, daß der mit dem einen Teil des Befestigungsschilds verbundene und in der Laufbahn des oberen Längsgurtes des Verdeckgestells geführte Hängegleiter zwei jeweils teilkugelförmige Rollen umfaßt.

Weitere Vorteile und Merkmale der Erfindung ergeben sich aus der nachfolgenden Beschreibung sowie aus den Unteransprüchen.

Die Erfindung wird nachstehend unter Bezugnahme auf die anliegenden Zeichnungen anhand eines bevorzugten Ausführungsbeispiels näher erläutert

Fig. 1 zeigt eine perspektivische Ansicht eines mit einem Planenaufbau ausgestatteten Fahrzeugaufbaus.

Fig. 2 zeigt einen Querschnitt des oberen Bereichs eines bevorzugten Ausführungsbeispiels einer erfindungsgemäßen Seitenplanenaufhängung.

Fig. 3 zeigt eine Seitenansicht des oberen Bereiches der Seitenplanenaufhängung aus Fig. 2.

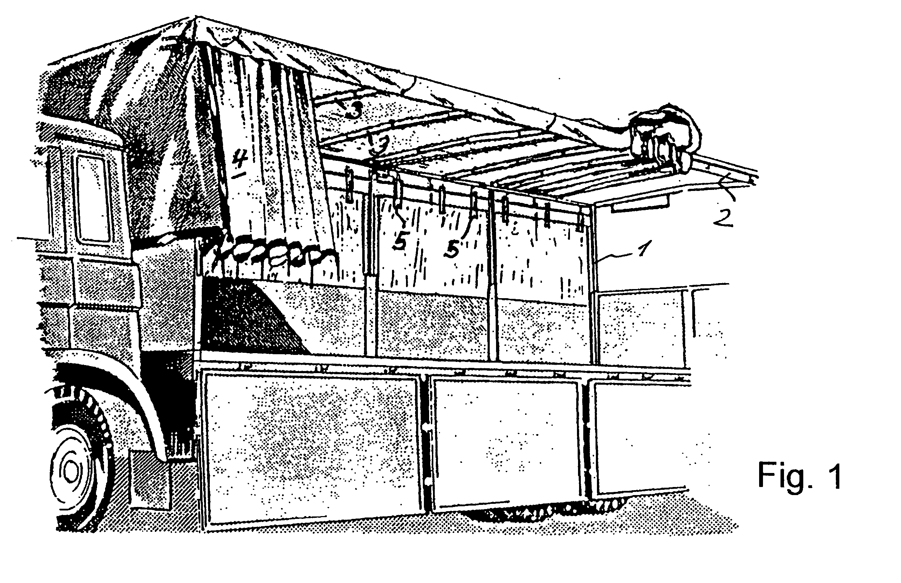

Bei einem in Fig. 1 lediglich schematisch dargestellten, mit einem zusammenschiebbaren Verdeck bzw. zusammenschiebbaren Seitenplanen ausgestatteten Fahrzeugaufbau besteht das Verdeckgestell in der Hauptsache aus die Laderaumlänge überspannenden, über aufragende Stützen und Rungen 1 gegen das Fahrzeugchassis abgestützten oberen Längsgurten 2, wobei die eine Dachabdeckung, insbesondere eine Plane abstützenden, bei geschlossenem Verdeck zugleich eine Queraussteifung des oberen Bereichs des Verdeckgestells bewirkenden, in Fahrzeuglängsrichtung verschieblichen Spriegel 3 an den oberen Längsgurten 2 abgestützt sind. Die oberen Längsgurte 2 sind ihrerseits über eine Anzahl in Fahrzeuglängsrichtung längsverschieblicher Rungen 1 aufgehängt und die Seitenplanen 4 sind längsverschieblich an den oberen Längsgurten 2 aufgehängt. Die Aufhängung der Seitenplane 4 an einem derartigen Verdeckgestell umfaßt im wesentlichen Hängegleiter 5, welche vermittels Rollen 6 längsverschieblich an zugeordneten Laufbahnen 7 der oberen Längsgurte 2 des Verdeckgestells aufgehängt sind, und die jeweils über ein Befestigungsschild 8 mit einer Seitenwandplane 4 verbunden sind.

Der Befestigungsschild 8 ist grundsätzlich zweiteilig ausgebildet und umfaßt einen ersten, mit den in die Laufbahn 7 des oberen Längsgurtes 2 des Verdeckgestells eingreifenden Rollen 6 verbundenen Teil 10 sowie einen zweiten, mit der Plane 4 verbundenen Teil 11. Die beiden Teile 10 und 11 des Befestigungsschilds 8 sind entgegen der Last einer Zugfeder 12 relativ zueinander beweglich.

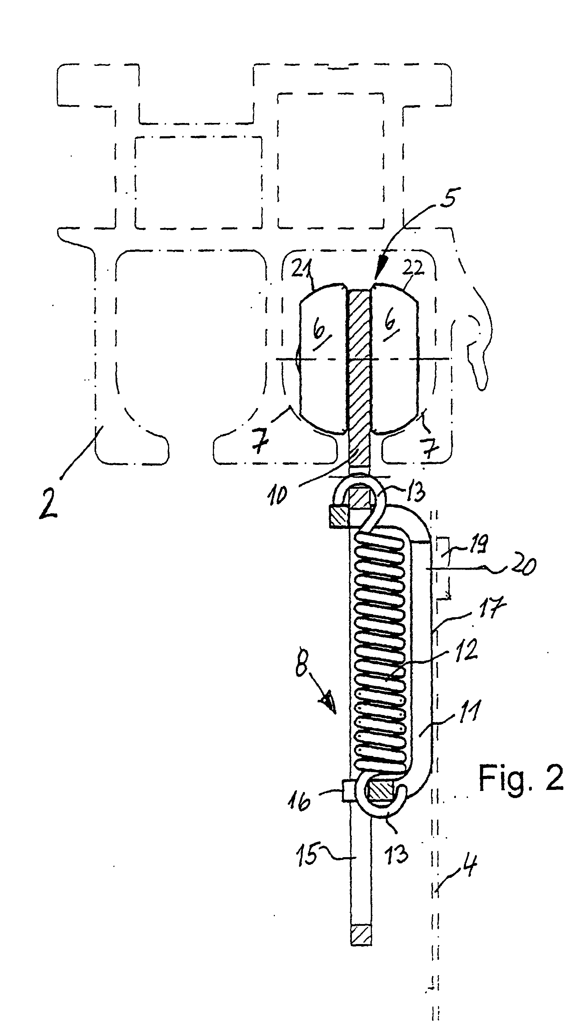

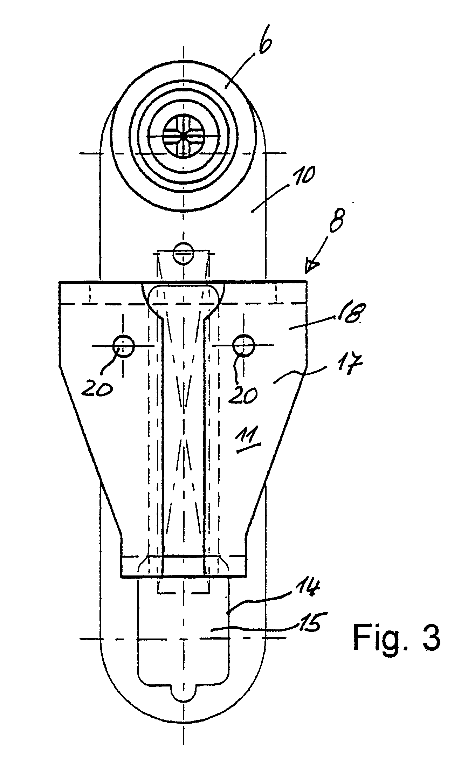

In dem insbesondere in den Fig. 2 und 3 gezeigten Ausführungsbeispiel ist die Zugfeder 12 durch eine Schraubenfeder gebildet, die einerseits an dem mit dem Gleiter verbundenen Teil 10 des Befestigungsschilds 8 und andererseits an dem an der Plane 4 befestigten Teil 11 des Befestigungsschilds 8 jeweils vermittels eines teilringförmigen Endhakens 13 eingehängt ist. Von den beiden aneinander geführten, relativ zueinander beweglichen Teilen 10 und 11 des Befestigungsschilds 8 ist das mit dem Gleiter verbundene Teil 10 als ebener und mit einer mittigen Langlochausnehmung 15 versehener Flachmaterialzuschnitt und das mit der Plane 4 verbundene Teil 11 des Befestigungsschilds 8 bügelförmig ausgebildet. Ferner ist das bügelförmig ausgebildete Teil 11 zumindest einseitig mit die Längsränder 14 der Langlochausnehmung 15 in dem mit dem Gleiter verbundenen Teil 10 hintergreifenden Pratzen 16 ausgestattet.

Die der Befestigung der Plane 4 zugeordnete Rückenfläche 17 des mit der Plane 4 zu verbindenden Teils 11 des Befestigungsschilds 8 weist eine im wesentlichen dreieckförmige, sich von oben nach unten verjüngende Grundrißform auf. In dem gezeigten Ausführungsbeispiel ist das mit der Plane 4 verbundene Teil 11 des Befestigungsschilds 8 in seinem oberen Bereich das mit dem Gleiter verbundene Teil des Befestigungsschilds 8 umgreifend ausgebildet und in diesem Bereich vermittels einer Langlochausnehmung in dem senkrecht zur Ebene seiner Rückenfläche abgestellten Schenkelbereich seiner Bügelform an dem mit dem Gleiter verbundenen Teil 10 des Befestigungsschilds 8 geführt. Die in der Längsmitte des mit dem Gleiter verbundenen Teils 10 angeordnete und über die Länge des bügelförmigen Teils 11 hin eine in ihrer Breite dem Durchmesser der Zugfeder 12 entsprechende Breite aufweisende Langlochausnehmung 15 ist in ihrem unteren Bereich mit einer Verbreiterung 18 ausgestattet.

Die Plane 4 ist im Bereich deren größter Breite mittels einer Druckverteilungsplatte 19 und einer wenigstens zwei Nieten 20 umfassenden Nietung an der Rückenfläche des mit der Plane 4 verbundenen Teils 10 befestigt. Der mit dem einen Teil 10 des Befestigungsschilds 8 verbundene und in der Laufbahn 7 des oberen Längsgurtes 2 des Verdeckgestells geführte Gleiter 5 umfaßt zwei jeweils teilkugelförmige Rollen 21 und 22.

## Patentansprüche

1. Seitenplanenaufhängung an Verdecken für Nutzfahrzeuge, insbesondere zusammenschiebbaren Verdecken für Fahrzeugaufbauten und Container, umfassend ein Verdeckgestell aus die Laderaumlänge wenigstens teilweise überspannenden, über aufragende Stützen (1) und Rungen (1) gegen ein Fahrzeugchassis abgestützten oberen Längsgurten (2), bei dem eine Dachabdeckung, insbesondere eine Plane, abstützende, bei geschlossenem Verdeck zugleich eine Queraussteifung des oberen Bereichs des Verdeckgestells bewirkende, in Fahrzeuglängsrichtung verschiebliche Spriegel (3) an den oberen Längsgurten (2) abgestützt sind, bei dem ferner die Seitenplanen (4) vermittels Hängegleiter (5), insbesondere vermittels mit Rollen (6) ausgestatteter Hängegleiter (5), längsverschieblich an zugeordneten Laufbahnen (7) der oberen Längsgurte (2) aufgehängt und mit ihrem unteren Ende am Fahrzeugaufbau befestigbar sind, und wobei die Hängegleiter (5) jeweils über einen Befestigungsschild (8) mit der Seitenplane (4) verbunden sind,
**dadurch gekennzeichnet,**
**daß** der Befestigungsschild (8) zweiteilig ausgebildet ist,
**daß** ein erstes Teil (10) des Befestigungsschilds (8) mit dem in die Laufbahn (7) des oberen Längsgurts (2) des Verdeckgestells eingreifenden Hängegleiter (5) verbunden ist,
**daß** ein zweites Teil (11) des zweiteiligen Befestigungsschilds (8) mit dem oberen Ende der dem Laderaum zugekehrten Seite der Seitenplane (4) verbunden ist, und
**daß** die beiden Teile (10, 11) des zweiteiligen Befestigungsschilds (8) entgegen der Last einer Feder (12) relativ zueinander verstellbar sind.

2. Seitenplanenaufhängung nach Anspruch 1, **dadurch gekennzeichnet, daß** die beiden Teile (10, 11) des Befestigungsschilds (8) entgegen der Last einer Zugfeder (12) relativ zueinander beweglich sind.

3. Seitenplanenaufhängung nach Anspruch 2, **dadurch gekennzeichnet, daß** die Zugfeder (12) als Schraubenfeder ausgebildet ist und einerseits an dem ersten Teil (10) und andererseits an dem zweiten Teil (11) jeweils vermittels eines teilringförmigen Endhakens (13) eingehängt ist.

4. Seitenplanenaufhängung nach einem der Ansprüche 1 bis 3, **dadurch gekennzeichnet, daß** die beiden relativ zueinander beweglichen Teile (10, 11) des Befestigungsschilds (8) in der Weise aneinander geführt sind, daß das erste Teil (10) als ebener und mit einer mittigen Langlochausnehmung (15) versehener Flachmaterialzuschnitt und das zweite Teil (11) bügelförmig ausgebildet und zumindest einseitig mit die Längsränder (14) der Langlochausnehmung (15) in ersten Teil (10) hintergreifenden Pratzen (16) ausgestattet ist.

5. Seitenplanenaufhängung nach einem der Ansprüche 1 bis 4, **dadurch gekennzeichnet, daß** eine der Befestigung der Seitenplane (4) zugeordnete Rückenfläche (17) des ersten Teils (11) des Befestigungsschilds (8) eine im wesentlichen dreieckformige, sich von oben nach unten verjüngende Grundrißform aufweist.

6. Seitenplanenaufhängung nach einem der Ansprüche 1 bis 5, **dadurch gekennzeichnet, daß** das mit der Seitenplane (4) verbundene, eine sich von oben nach unten verjüngende Grundrißform aufweisende zweite Teil (11) des Befestigungsschilds (8) mit seinem oberen Bereich das mit dem Hängegleiter (5) verbundene erste Teil (10) des Befestigungsschilds (8) umgreifend ausgebildet und in diesem Bereich vermittels einer Langlochausnehmung in dem senkrecht zur Ebene seiner Rückenfläche (17) abgestellten Schenkelbereich seiner Bügelform an dem mit dem Hängegleiter (5) verbundenen erste Teil (10) geführt ist.

7. Seitenplanenaufhängung nach Anspruch 6 **dadurch gekennzeichnet, daß** die in der Längsmitte des mit dem Hängegleiter (5) verbundenen Teils (10) angeordnete und über die Länge des bügelförmigen zweiten Teils (11) hin in ihrer Breite im wesentlichen eine dem Durchmesser der Zugfeder (12) entsprechende Breite aufweisende Ausnehmung in ihrem unteren Bereich mit einer Verbreiterung (18) ausgestattet ist.

8. Seitenplanenaufhängung nach einem der Ansprüche 1 bis 7, **dadurch gekennzeichnet, daß** die Seitenplane (4) im Bereich deren größter Breite mittels einer Druckverteilungsplatte (19) und einer wenigstens zwei Nieten (20) umfassenden Nietung an einer Rückenfläche (17) des zweiten Teils (11) befestigt ist.

9. Seitenplanenaufhängung nach einem der Ansprüche 1 bis 8, **dadurch gekennzeichnet, daß** der mit dem ersten Teil (10) des Befestigungsschilds (8) verbundene und in der Laufbahn (7) des oberen Längsgurts (2) des Verdeckgestells geführte Hängegleiter (5) zwei jeweils teilkugelförmige Rollen (21, 22) umfaßt.

## Claims

1. Side-tarpaulin suspension means on folding tops for commercial vehicles, in particular folding tops which can be pushed together for vehicle bodies and containers, comprising a folding-top frame consisting of upper longitudinal flanges (2) which span at least part of the length of the loading compartment and are supported against a vehicle chassis via upwardly protruding supports (1) and stakes (1), wherein bows (3) which support a roof covering, in particular a tarpaulin, and, when the folding top is closed, at the same time bring about transverse bracing of the upper region of the folding-top frame and can be displaced in the longitudinal direction of the vehicle, are supported on the upper longitudinal flanges (2), wherein furthermore the side tarpaulins (4) are suspended by means of hanging sliders (5), in particular by means of hanging sliders (5) which are provided with rollers (6), in a longitudinally displaceable manner on assigned running tracks (7) of the upper longitudinal flanges (2) and are capable to be connected to the vehicle body at their lower end, and wherein the hanging sliders (5) each are connected to the side tarpaulin (4) via a fastening plate (8),
**characterized in**
**that** the fastening plate (8) is of two-part design,
**that** a first part (10) of the fastening plate (8) is connected to the hanging slider (5) engaging in the running track (7) of the upper longitudinal flange (2) of the folding-top frame,
**that** a second part of the two-part fastening plate (8) is connected to the upper end of of the side facing the loading compartment of the side tarpaulin (4), and
**that** the two parts (10, 11) of the two-part fastening plate (8) can be adjusted relative to each other counter to the load of a spring (12).

2. Side-tarpaulin suspension means according to claim 1, **characterized in that** the two parts (10, 11) of the fastening plate (8) can be moved relative to each other counter to the load of a tension spring (12).

3. Side-tarpaulin suspension means according to claim 2, **characterized in that** the tension spring (12) is designed as a helical spring and is fitted at one end to the first part (10) and at the other end to the second part (11), in each case by means of a partially annular end hook (13).

4. Side-tarpaulin suspension means according to one of claims 1 to 3, **characterized in that** the two parts (10, 11) which can be moved relative to each other of the fastening plate (8) are guided on each other in such manner that the first part (10) is designed as a planar flat material blank which is provided with a central oblong recess (15) and the second part (11) is of bracket-shaped design and is provided at least on one side with claws (16) which grip behind the longitudinal edges (14) of the oblong recess (15) in the first part (10).

5. Side-tarpaulin suspension means according to one of claims 1 to 4, **characterized in that** a back surface (17), which is assigned to the fastening of the side tarpaulin (4) of the second part (11) of the fastening plate (8) has an essentially triangular outline shape which tapers from the top downwards.

6. Side-tarpaulin suspension means according to one of claims 1 to 5, **characterized in that** the second part (11) of the fastening plate (8) which is connected to the side tarpaulin (4) and has an outline shape which tapers from the top downwards is designed such that it grips with its upper region around the first part (10) of the fastening plate (8) which is connected to the hanging slider (5) and in this region is guided on the first part (10) which is connected to the hanging slider (5) by means of an oblong recess **in that** leg region of its bracket shape which is set perpendicular to the plane of its back surface (17).

7. Side-tarpaulin suspension means according to claim 6, **characterized in that** the recess which is arranged in the longitudinal centre of the part (10) connected to the hanging slider (5) and has a width over the length of the bracket-shaped second part (11) which essentially corresponds in width to the diameter of the tension spring (12) is provided in its lower region with a widened portion (18).

8. Side-tarpaulin suspension means according to one of claims 1 to 7, **characterized in that** the side tarpaulin (4) is fastened in the region of its greatest width to a back surface (17) of the part (11) connected to the tarpaulin (4) by means of a pressure-distribution plate (19) and a riveted joint comprising at least two rivets (20).

9. Side-tarpaulin suspension means according to one of claims 1 to 8, **characterized in that** the hanging slider (5) which is connected to the first part (10) of the fastening plate (8) and is guided in the running track (7) of the upper longitudinal flange (2) of the folding-top frame comprises two rollers (21, 22) which are each partially spherical.

## Revendications

1. Dispositif d'accrochage de bâche latérale sur des capotes pour véhicules utilitaires, en particulier des capotes repliables pour structures de véhicule et conteneurs, comprenant un châssis de capote formé à partir de longerons (2) supérieurs prenant appui contre un châssis de véhicule par l'intermédiaire d'appuis (1) et de ridelles (1) montant(e)s et couvrant au moins partiellement la longueur de l'espace de chargement, dans lequel des arceaux (3), mobiles dans la direction longitudinale du véhicule, soutenant un recouvrement de toit, en particulier une bâche, et provoquant en même temps une rigidification transversale de la zone supérieure du châssis de capote lorsque la capote est fermée, sont soutenus sur les longerons (2) supérieurs, dans lequel en outre les bâches latérales (4) sont accrochées de façon mobile longitudinalement à l'aide de coulisseaux d'accrochage (5), en particulier de coulisseaux d'accrochage (5) munis de galets (6), sur des pistes de défilement (7) associées aux longerons (2) supérieurs, et sont susceptibles d'être fixées sur la carrosserie du véhicule par leur extrémité inférieure, et dans lequel les coulisseaux d'accrochage (5) sont chacun reliés à la bâche latérale (4) par une plaque de fixation (8),
**caractérisé en ce que**
la plaque de fixation (8) est réalisée en deux parties,
**en ce qu'**une première partie (10) de la plaque de fixation (8) est reliée au coulisseau d'accrochage (5) s'engageant dans la piste de défilement (7) du longeron (2) supérieur du bâti de capote,
**en ce qu'**une deuxième partie (11) de la plaque de fixation (8) réalisée en deux parties est reliée à l'extrémité supérieure de la face de la bâche latérale (4) qui est tournée vers l'espace de chargement, et
**en ce que** les deux parties (10, 11) de la plaque de fixation (8) réalisée en deux parties sont réglables l'une relativement par rapport à l'autre sous l'action d'une charge exercée par un ressort (12).

2. Dispositif d'accrochage de bâche latérale selon la revendication 1, **caractérisé en ce que** les deux parties (10, 11) de la plaque de fixation (8) sont déplaçables l'une par rapport à l'autre sous l'action de la charge exercée par un ressort de traction (12).

3. Dispositif d'accrochage de bâche latérale selon la revendication 2, **caractérisé en ce que** le ressort de traction (12) est réalisé sous la forme d'un ressort hélicoïdal et est accroché, d'une part, sur la première partie (10) et, d'autre part, sur la deuxième partie (11), chaque fois au moyen d'un crochet d'extrémité (13) en forme d'anneau partiel.

4. Dispositif d'accrochage de bâche selon l'une des revendications 1 à 3, **caractérisé en ce que** les deux parties (10, 11) de la plaque de fixation (8) mobiles l'une par rapport à l'autre sont guidées l'une sur l'autre de telle manière que la première partie (10) soit réalisée sous la forme d'une découpe en matériau plat, plane et munie d'un évidement central en forme de trou oblong (15), et que la deuxième partie (11) soit conformée en étrier et soit munie, au moins sur un côté, de griffes (16) saisissant par l'arrière les bords longitudinaux (14) de l'évidement en forme de trou oblong (15) ménagé dans la première partie (10).

5. Dispositif d'accrochage de bâche selon l'une des revendications 1 à 4, **caractérisé en ce qu'**une face dorsale (17) de la deuxième partie (11) de la plaque de fixation (8) qui est affectée à la fixation de la bâche latérale (4), présente un profil en forme de triangle s'effilant du haut vers le bas.

6. Dispositif d'accrochage de bâche selon l'une des revendications 1 à 5, **caractérisé en ce que** la deuxième partie (11) de la plaque de fixation (8) reliée à la bâche latérale (4) ayant un profil s'effilant du haut vers le bas, est réalisée de manière qu'elle entoure par sa zone supérieure la première partie (10) de la plaque de fixation (8) qui est reliée au coulisseau d'accrochage (5), et dans cette zone, est guidée sur la première partie (10) reliée au coulisseau d'accrochage (5), dans la zone de branche de sa forme en étrier pliée perpendiculairement au plan de sa face dorsale (17), à l'aide d'un évidemment en forme de trou oblong.

7. Dispositif d'accrochage selon la revendication 6, **caractérisé en ce que** l'évidemment, ménagé dans l'axe longitudinal de la partie (10) reliée au coulisseau d'accrochage (5) et présentant, sur la longueur de la deuxième partie (11) en forme d'étrier, dans sa largeur, une ouverture qui correspond sensiblement au diamètre du ressort de traction (12), est muni d'un élargissement (18) dans sa zone inférieure.

8. Dispositif d'accrochage selon l'une des revendications 1 à 7, **caractérisé en ce que**, dans la zone de sa largeur maximale, la bâche latérale (4) est fixée sur une face dorsale (17) de la deuxième partie (11), à l'aide d'une plaque de répartition de pression (19) et d'un rivetage comprenant au moins deux rivets (20).

9. Dispositif d'accrochage selon l'une des revendications 1 à 8, **caractérisé en ce que** le coulisseau d'accrochage (5) relié à la première partie (10) de la plaque de fixation (8) et guidé dans la piste de défilement (7) du longeron (2) supérieur du bâti de capote, comprend deux galets (21, 22) chacun en forme de parties de sphère.
